# EUROPEAN PATENT SPECIFICATION

(11) **EP 3 954 474 B1**
(45) Date of publication and mention of the grant of the patent: **05.06.2024**
(21) Application number: 20213496.1
(22) Date of filing: 11.12.2020
(51) Int. Cl.: B09C 1/00

(54) **MULTIFUNCTIONAL SYSTEM FOR RECOVERING HIGH VISCOSITY OIL FLOWING ONTO AND ADHERED TO SHORE**
MULTIFUNKTIONELLES SYSTEM ZUR RÜCKGEWINNUNG VON HOCHVISKOSEM ÖL, DAS ANS UFER STRÖMT UND DARAN HAFTET
SYSTÈME MULTIFONCTIONNEL DE RÉCUPÉRATION D'HUILE HAUTE VISCOSITÉ CIRCULANT SUR UN QUAI ET COLLÉ À CE DERNIER

(30) Priority: 14.08.2020 KR 20200102557
(43) Date of publication of application: 16.02.2022
(73) Proprietor: Korea Institute of Ocean Science and Technology, Busan 49111 (KR)
(72) Inventor: CHOI, Hyuek Jin, DAEJEON (KR); MIN, Cheon Hong, SEJONG-SI (KR); CHO, Meang-Ik, DAEJEON (KR); OH, Jaewon, Geoje-si (KR); KIM, Seong-Soon, Daejeon (KR)
(74) Representative: EP&C

(56) References cited:
- EP-A1- 0 635 084
- EP-B1- 0 635 084
- KR-A- 20030 054 151
- KR-A- 20110 134 069
- US-A- 4 769 142

## Description

### CROSS REFERENCE TO RELATED APPLICATION

The present application claims priority to Korean Patent Application No. 10-2020-0102557, filed August 14, 2020.

### BACKGROUND OF THE INVENTION

### Field of the Invention

The present disclosure relates to a multifunctional system for recovering high viscosity oil flowing onto and adhered to a shore. More specifically, the present disclosure relates to a multifunctional system for recovering high viscosity oil flowing onto and adhered to a shore, the system being configured to be selectively combined with various equipment capable of recovering or removing high viscosity oil, which is flowing onto or adhered to a beach, a shore, or a wide range of shorelines adjacent to a coastal area, within a short period of time.

### Description of the Related Art

Generally, due to an oil spill accident occurring on the sea, a marine ecosystem as well as a natural ecosystem such as a beach, a shore, or a coastal area adjacent to a spill accident spot are damaged.

Spilled oil forms an oil film on the sea to pollute the sea, floats on the sea for a long period of time, and pollutes the entire shore by being pushed to the shore in a weathered state by an influence of wind or tides. In particular, at low tide, the oil remains on a sandy beach or a gravel field, thereby causing serious environmental and ecosystem damage to a wide range of the shore. Therefore, in order to prevent additional environmental pollution, it is important to recover the oil, which is spilled on the sea, becomes to have high viscosity, and enters onto the shore, or to quickly remove the oil adhered to the shore.

Currently, various methods, such as methods using a control ship and an oil fence and methods using an adsorbent or a landing net, are used for marine control of oil spilled on the sea.

However, the above methods of spilled oil control are mainly used on the sea, wherein, in a shallow neritic zone (less than 1 m in depth) or an area near the shore, the possibility that a secondary accident (overturning of the control ship and the like) occurs is high, so the work for removing spilled oil control is very difficult and dangerous to perform.

In addition, in case of a large-scale oil spill accident, it is inevitable that a large amount of spilled oil flows onto the shore and is adhered to the shore because it is difficult to respond early to the accident due to restricting factors such as bad weather and the like.

On the other hand, in an event of an oil spill accident on the sea, the oil floating on the sea may be prevented from being spread or may be partially recovered by using a marine control ship, absorbent, a landing net, or the like. However, in spite of a marine pollution control work of the oil spilled on the sea, around 70% of the spilled oil still flows onto a shore and is left unprotected in a defenseless state. Accordingly, such damage is emerging as a very big issue.

However, conventionally, equipment or tools, which are capable of removing a large amount of oil flowing onto the shore or oil flowing onto the shore and adhered to sand or gravel or of removing and recovering the oil by separating only the oil from the seawater containing the oil, have not been provided. Therefore, a recovery rate was very low because most of the oil was removed by primitive control methods such as scooping up by labor, rocky cleaning work using oil absorbents, or the like. Furthermore, as workers step on the oil or the removal work elapses for a long period of time, the oil adhered to the shore penetrates more into the ground, thereby increasing environmental pollution. Accordingly, it takes a long period of time to remove the oil and restore the environment. As a result, the marine pollution control work of the spilled oil is costly. In addition, such work even adversely affects the health of working people such as local residents and volunteers who participate in a coastal pollution control work.

Accordingly, there is a need for a device or a method that is capable of saving time and money and at the same time is capable of quickly removing not only the oil flowing onto the shore but also the oil adhered to the shore due to an oil spill accident.

US4769142A1 discloses an amphibious oil spill absorbing machine having at least one rotatably mounted absorbing roller having an oil absorbing covering, and a pinch roller bearing against the oil absorbing roller, and oil collection means for collecting oil squeezed from the covering. A pair of booms are provided having generally vertically orientated blades for allowing to sweep a wider path than the width of the roller.

WO9320827A1 has disclosed a system for recovering oil from beaches including an articulated vehicle for propelling a vacuum head for drawing a mixture of air, water and oil and separate the oil and water into a sump for further processing using an oil-water separator outside the head.

KR20030054151 A discloses a waterjet recovery system for removing floating substances such as oil or garbage floating on a water surface. Discharge pipes at both sides of the double hull ship coupled to a pump are provided with nozzles for jetting water. Oil and other floating materials are directed by the ejected water jets to the rear of the ship and collected.

KR1020110134069A discloses a cleanup ship using rotatably arranged brushes for guiding and directing oil floating on water to an oil skimmer, connected to an water-oil separator.

The foregoing is intended merely to aid in the understanding of the background of the present disclosure, and is not intended to mean that the present disclosure falls within the purview of the related art that is already known to those skilled in the art.

### Documents of Related Art

### (Patent Document)

Korean Patent No. 10-1732896 (April 27, 2017)

### SUMMARY OF THE INVENTION

Accordingly, the present disclosure has been made keeping in mind the above problems occurring in the related art, and the present disclosure is to provide a multifunctional system for recovering high viscosity oil flowing onto and adhered to a shore, the system being configured to promptly recover and remove oil with various equipment and methods according to oil characteristics and working environment while freely moving around shoreline surroundings or land.

In addition, another objective of the present disclosure is to provide a multifunctional system for recovering high viscosity oil flowing onto and adhered to a shore, the system being configured to allow oil recovered at a site to be directly transferred to an external oil storage tank or to be separated into oil and water to store the oil.

In order to achieve the above objectives, there may be provided a multifunctional system as defined in claim 1.

The system may further include a pair of connection arms provided in directions parallel to each other in the front of the amphibious vehicle, each of the arms having one side hinge-coupled to the front side of the amphibious vehicle and an opposite side connected to the oil collection assembly, wherein the opposite side of each of the arms may be selectively coupled to the oil collection assembly.

Multifunctional systems outside the scope of the present invention may include: a desorbing member rotatably provided in a horizontal direction with the ground, configured to desorb oil adhered on the surface of sand or gravel on the shore, and protrudingly provided with coupling protrusions at opposite ends thereof; and a rotation skimmer comprising a first cover plate rotatably connected to each of the coupling protrusions on opposite sides of the desorbing member, and configured to shield a portion above the desorbing member.

The desorbing member may include: a rotation roller rotatably provided in a horizontal direction with the ground; and a brush provided in a spiral shape along a longitudinal direction on an outer surface of the rotation roller.

The desorbing member may include a rotation drum rotatably provided in a horizontal direction with the ground, wherein the rotation drum may have a lipophilic surface.

The scraper skimmer is configured to collect the oil in a direction to the transfer assembly by being movably provided in a direction in which an opposite end of one side thereof may be moved away from or closer to an opposite end of an opposite side thereof with the one end of the one side thereof and the one end of the opposite side thereof as references, respectively.

The scraper skimmer includes: a second cover plate having one side coupled to the transfer assembly and formed with an opening open toward a front; a pair of supports each having one end connected to a corresponding one of opposite sides of the opening; sweeping arms each having one end hinge-coupled to an opposite end of the corresponding support, and an opposite end being stretchably formed toward a front of the amphibious vehicle, thereby collecting the oil; a seawater supply pipe installed inside each of the sweeping arms along a longitudinal direction of same and configured to receive water supplied from the recovered oil treatment assembly and transfer the received water to each of the sweeping arms; and a plurality of spray nozzles installed at regular intervals on one surface of each of the sweeping arms facing each other, connected to the seawater supply pipe, and configured to spray the water received from the seawater supply pipe to the outside, thereby inducing the oil.

The multifunctional system may further include: a third cover plate having one side coupled to the transfer assembly and having an inlet portion formed to open toward the front; a pair of caterpillar conveyors each having one side positioned on a corresponding one of opposite sides of the inlet portion and an opposite side being extended in a direction away from one another, thereby rotating in a direction to the inlet portion; and a blade skimmer comprising a plurality of blades configured to collect the oil and foreign substances by being provided to be spaced apart from each other at predetermined intervals on an outer surface of the caterpillar conveyor.

Multifunctional systems outside the scope of the present invention may further include: a vacuum suction skimmer provided with a suction unit configured to vacuum up the oil floating on a water surface; and a vacuum tank configured to transmit vacuum suction force to the vacuum suction skimmer by being connected to the vacuum suction skimmer.

The transfer assembly may include: a transfer body formed with a transfer space, having one side open toward a front and being introduced with the oil and foreign substances transferred from the oil collection assembly introduced therein; a guide screw configured to transfer the oil and the foreign substances inside the transfer space from one side to an opposite side by being rotatably installed in the transfer space; a skimmer conveyor configured to transfer the oil and the foreign substances received from the guide screw to the recovered oil treatment assembly; and a tray located at a lower part of the transfer body and formed with an accommodation space being accommodated with the oil and water dropped from a bottom of a partition plate.

The recovered oil treatment assembly may include: a first oil storage tank configured to accommodate the oil transferred from the transfer assembly or the transfer pump assembly; a second oil storage tank configured to accommodate the oil and water recovered from the transfer assembly; an oil-water separator configured to separate water from the recovered oil by being connected to the second oil storage tank, discharge the separated water to the outside, and supply the separated oil to the first oil storage tank; and an oil recovery line configured to transfer the oil separated from the oil-water separator to the second oil storage tank by connecting the oil-water separator and the lower portion of the second oil storage tank.

The transfer pump assembly may include: a transfer pump located inside the tray, thereby being configured to pump oil and water accommodated in the accommodation space and to transfer the oil and water to the recovered oil treatment assembly or to the outside; a first transfer line having one end connected to the transfer pump and an opposite end selectively connected to either one of the first oil storage tank and an external discharge hose transferred from the outside; and a second transfer line having one end connected to the transfer pump and an opposite end connected to the second oil storage tank.

The transfer pump assembly may further include a floating oil transfer line configured to transfer the oil floating on an upper portion of the second oil storage tank to the first oil storage tank by connecting upper portions of the first oil storage tank and the second oil storage tank.

The system may further include equipment for collecting waste flowing onto the shore configured to collect waste on the shore and the beach while rotating a transfer conveyor having a plurality of rakes by being detachably coupled to the rear of the amphibious vehicle.

Details of other embodiments are included in the detailed description and drawings.

As described above, according to the multifunctional system for recovering high viscosity oil flowing onto and adhered to a shore according to an embodiment of the present disclosure, by being mounted on an amphibious vehicle that is capable of moving on a neritic zone and land, the system can remove and recover low or high viscosity oil flowing onto a shore and high viscosity oil adhered to the shore while moving freely on the sea and land. Therefore, there are effects that it is possible to remove a large amount of oil in a short period of time and to reduce time and cost required for an oil pollution control work, and the work can be done safely.

In addition, according to the multifunctional system for recovering high viscosity oil flowing onto and adhered to a shore according to the present invention the system can remove and recover oil using a scraper skimmer constituting an oil collection assembly according to characteristics of the oil flowing onto and adhered to the shore, the working environment, and the like. Therefore, there is also an effect that it is possible to efficiently perform the oil pollution control work.

In addition, according to the multifunctional system for recovering high viscosity oil flowing onto and adhered to a shore according to the embodiment of the present disclosure, the system is provided with a recovered oil treatment assembly mounted on the amphibious vehicle, wherein the recovered oil treatment assembly accommodates the oil collected from the oil collection assembly and can separate water from the accommodated oil and then store the separated oil therein. Accordingly, the system can store the recovered oil in the recovered oil treatment assembly in an urgent situation, whereby an emergency response to an oil spill accident occurring on the sea is possible. In addition, the system can store a large amount of oil recovered and removed by the oil collection assembly in a separate loading vehicle directly without passing through the oil storage tank in the vehicle, so there is also an effect that a large amount of oil can be processed in a short period of time.
In addition, according to the multifunctional system for recovering high viscosity oil flowing onto and adhered to a shore according to the embodiment of the present disclosure, the water separated from oil through an oil-water separator can be supplied to the spray nozzles of the scraper skimmer or the spray nozzles of the blade skimmer. Therefore, the system does not require installation of a pump and the like to supply seawater and the like to the scraper skimmer or the blade skimmer, so there is an effect of reducing not only the number of parts but also cost and time.

Effects of the present disclosure are not limited to the effects mentioned above, and other effects not mentioned will be clearly understood by those skilled in the art from the description of the claims.

### BRIEF DESCRIPTION OF THE DRAWINGS

The above and other objectives, features and other advantages of the present disclosure will be more clearly understood from the following detailed description when taken in conjunction with the accompanying drawings, in which:
FIG. 1 is a perspective view showing a configuration of a multifunctional system for recovering high viscosity oil flowing onto and adhered to a shore according to an embodiment of the present disclosure not forming part of the present invention;
FIG. 2 is a perspective view showing a partial configuration of a rotation skimmer according to the embodiment of the present disclosure not forming part of the present invention;
FIG. 3 is a perspective view showing a partial configuration of a rotation skimmer according to another embodiment of the present disclosure not forming part of the present invention;
FIG. 4 is a perspective view showing a configuration of a scraper assembly according to the embodiment of the present invention;
FIG. 5 is a plan view showing the configuration of the multifunctional system for recovering high viscosity oil flowing onto and adhered to the shore to which the configuration of the scraper assembly according to an embodiment of the present invention is applied;
FIG. 6 is a plan view showing the configuration of the multifunctional system for recovering high viscosity oil flowing onto and adhered to the shore to which a configuration of a blade skimmer according to a further embodiment of the present disclosure not forming part of the present invention;
FIG. 7 is a plan view showing the configuration of the multifunctional system for recovering high viscosity oil flowing onto and adhered to the shore to which a configuration of a vacuum suction assembly according to yet another embodiment of the present disclosure not forming part of the present invention;
FIG. 8 is a plan view showing the configuration of the multifunctional system for recovering high viscosity oil flowing onto and adhered to the shore to which a configuration of a transfer assembly according to the embodiment of the present disclosure is applied;
FIG. 9 is a schematic diagram showing a partial configuration of the multifunctional system for recovering high viscosity oil flowing onto and adhered to the shore according to an embodiment of the present disclosure not forming part of the present invention;
FIG. 10 is a perspective view showing a partial configuration of the multifunctional system for recovering high viscosity oil flowing onto and adhered to the shore according to the embodiment of the present disclosure;
FIG. 11 is a perspective view showing a configuration of a crane of the multifunctional system for recovering high viscosity oil flowing onto and adhered to the shore according to the embodiment of the present disclosure; and
FIG. 12 is a conceptual view showing a configuration of equipment for collecting waste flowing onto the shore of the multifunctional system for recovering high viscosity oil flowing onto and adhered to the shore according to the embodiment of the present disclosure.

### DETAILED DESCRIPTION OF THE INVENTION

Hereinbelow, exemplary embodiments of the present disclosure will be described in detail with reference to the accompanying drawings to an extent that those of ordinary skill in the art may easily implement the present disclosure.

In describing the embodiments, descriptions of technical contents that are well known in the technical field to which the present disclosure pertains and are not directly related to the present disclosure will be omitted. This is to more clearly convey the gist of the present disclosure without causing obfuscation by omitting unnecessary description.

For the same reason, some components in the accompanying drawings are exaggerated, omitted, or schematically illustrated. In addition, the size of each component does not fully reflect the actual size. The same reference numerals are assigned to the same or corresponding components in each drawing.

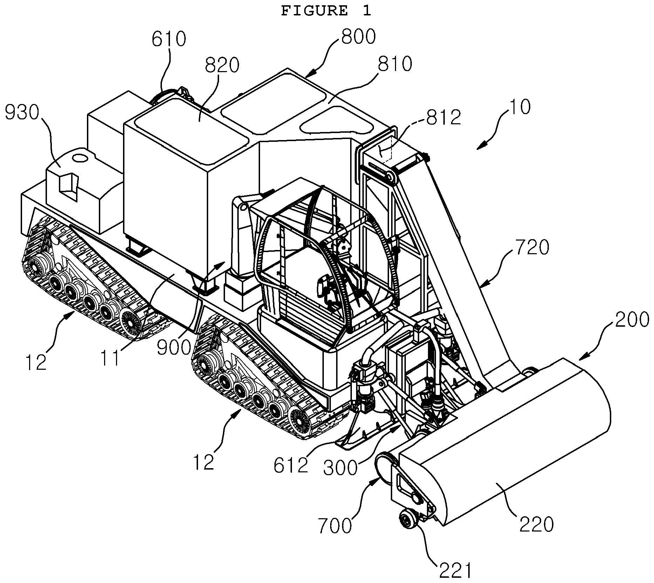

FIG. 1 is a perspective view showing a configuration of a multifunctional system for recovering high viscosity oil flowing onto and adhered to a shore according to an embodiment of the present disclosure not forming part of the present invention;

As shown in FIG. 1, the multifunctional system 10 for recovering high viscosity oil flowing onto and adhered to the shore is mounted on an amphibious vehicle 11. In the present embodiment, the amphibious vehicle 11 is capable of moving on the sea (less than 1 m in depth in the present embodiment) and on land. In this case, the amphibious vehicle 11 is moved by the thrust of a propeller (not shown) when moving on the sea and is moved by the driving force of a caterpillar track 12 when moving on land.

The amphibious vehicle 11 is able to move even in a soft ground, for example, mudflats, a beach, or the like by the caterpillar track 12. In addition, oil may be easily removed and recovered using the amphibious vehicle 11 even at a low draft level where the depth of a draft is about 50 cm.

An oil collection assembly is disposed in the front of the amphibious vehicle 11. Here, the oil collection assembly serves to collect oil. In the present embodiment, the oil collection assembly may be mounted in the front of the amphibious vehicle 11 by being composed of any one of a rotation skimmer 200, a scraper skimmer 400, a blade skimmer 500, and a vacuum suction skimmer 600. Therefore, the oil may be removed and recovered by selectively using the rotation skimmer 200, the scraper skimmer 400, the blade skimmer 500, and the vacuum suction skimmer 600 according to characteristics of the oil flowing onto and adhered to the shore, working environment, and the like.

In the present embodiment outside the scope of the invention, as shown in FIG. 1, the oil collection assembly may be provided with the rotation skimmer 200. Here, the rotation skimmer 200 serves to desorb adhesion oil, tar lumps, and the like adhered to surfaces of shore sand or gravel and to collect same.

The rotation skimmer 200 may be provided with a desorbing member 210 having a coupling protrusion 211 protruding at each of opposite ends thereof and provided with a first cover plate 220 to which the coupling protrusions 211 are each rotatably connected.

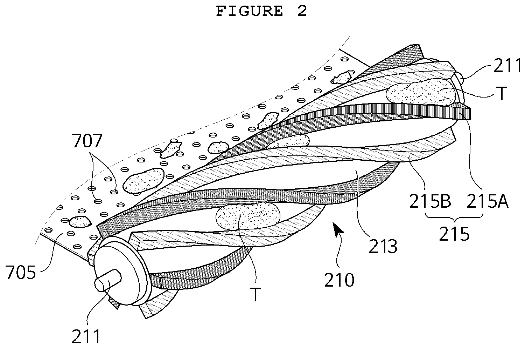

As shown in FIG. 2, the desorbing member 210 may include a rotation roller 213 and a brush 215.

The rotation roller 213 has a cylindrical shape having a predetermined length and is rotatably provided in a horizontal direction with respect to the ground. Opposite ends of the rotation roller 213 are each rotatably connected to the first cover plate 220. In the present embodiment outside the scope of the invention, the coupling protrusions 211 are each protrudingly formed at opposite ends of the rotation roller 213.

The brush 215 may be provided in a spiral shape along a longitudinal direction of the rotation roller 213 on an outer surface of the rotation roller 213. This is to allow the oil desorbed from the brush 215 to be moved in a direction to a transfer assembly 700 to be described below.

In addition, the brush 215 serves to desorb oil floating on a water surface or to scrape and desorb adhesion oil, tar lumps, and the like adhered to surfaces of rocks, or the like. In the present embodiment, the brush 215 may be made of a fiber bundle of a lipophilic material. This is to ensure that the oil effectively adheres to the brush 212.

As shown in FIG. 2, the brush 215 may be composed of a pair of a first brush 215A and a second brush 215B, which are made of materials different from each other. In the present embodiment, the first brush 215A may be made of a material harder than the second brush 215B, and the second brush 215B may be made of a material softer than the first brush 215A. This is to scrape and desorb adhesion oil, tar lumps, and the like that are fixed with the first brush 215A, and to sweep and collect the desorbed materials with the second brush 215B.

The first brush 215A and the second brush 215B may be formed by being spaced apart from each other at a predetermined distance. This is to allow foreign substances such as marine waste T to be inserted between the first brush 215A and the second brush 215B, thereby being collected. At this time, the collected marine waste T and the like may be desorbed and removed by a partition plate 705 to be described below.

In addition, in the present embodiment outside the scope of the invention, three pairs of the first brushes 215A and the second brushes 215B are disposed to be spaced apart from each other at predetermined intervals. In this case, the first brush 215A and the second brush 215B may extend along the length direction of the rotation roller 213 in a spiral shape on the outer surface of the rotation roller 213.

A top portion of the rotation roller 213 is shielded by the first cover plate 220. Here, opposite sides of the first cover plate 220 are rotatably connected to the opposite ends of the rotation roller 213, respectively.

In the present embodiment outside the scope of the invention, the first cover plate 220 may be provided with a first tag (not shown). In this case, the first tag may be provided at a position corresponding to a gripper. Information on the rotation skimmer 200 is stored in the first tag. In the present embodiment, the first tag is RFID but is not necessarily limited thereto.

As shown in FIG. 1, the first cover plate 220 may be provided with a guide wheel 221 on each of the opposite sides thereof. The guide wheels 221 are a part configured to smoothly move the rotation skimmer 200 in the same direction as the moving direction of the amphibious vehicle 11.

In the present embodiment outside the scope of the invention, although not shown, the first cover plate 220 may be formed with coupling slits at the opposite sides thereof, whereby the coupling protrusions 211 are inserted into the coupling slits and coupled thereto. The coupling slit may be detachably coupled to the first cover plate 220. One side of the coupling slit may be open so that the coupling protrusion 211 may be inserted into or separated from the coupling slit.

The one side of the first cover plate 220 extends toward the transfer assembly 700 to be described below and may be detachably coupled to a transfer body 701 of the transfer assembly 700. In this case, the first cover plate 220 may be connected to a connection arm 300 to be described below in a state of being hinge-coupled to the transfer body 701 by a hinge pin (not shown) .

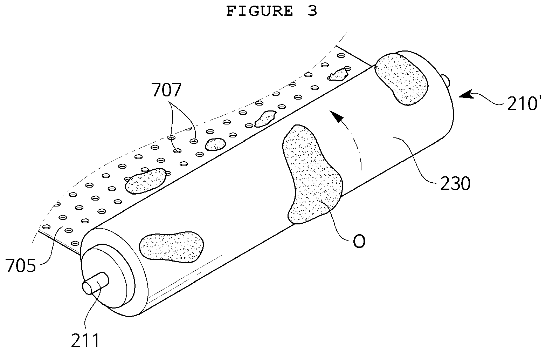

In the present embodiment outside the scope of the invention, the desorbing member 210 is composed of the rotation roller 213 and the brush 215, but is not limited thereto. For example, as shown in FIG. 3, the desorbing member 210' may be composed of a rotation drum 230.

The rotation drum 230 has a substantially cylindrical shape and is rotatably provided in a horizontal direction with respect to the ground. Opposite ends of the rotation drum 230 are rotatably connected to the first cover plate 220.

A surface of the rotation drum 230 may be formed to have lipophilic properties. This is to ensure that only oil may be adsorbed. To this end, a material obtained by processing wool fabric, cotton fabric, sawdust, and the like, which have been surface-treated so as to have a lipophilic surface, may be used, thereby being attached to the surface of the rotation drum 230.

The rotation drum 230 is suitable for removing particularly high viscosity oil O among oil in various states, as shown in FIG. 3. In this way, the oil removal efficiency may be further increased by replacing and using the rotation roller 213 to which the brush 215 is attached or the rotation drum 230 according to the characteristics of the oil. In addition, in the present embodiment, since the desorbing members 210 and 210' are detachably provided on the first cover plate 220, there is an effect of being reusable by being washed.

Meanwhile, as shown in FIG. 1, the oil collection assembly is movably connected to the amphibious vehicle 11 by the connection arms 300.

As shown in FIG. 1, the connection arms 300 may be provided in directions parallel to each other in the front of the amphibious vehicle 11. One side of each of the connection arms 300 is hinge-coupled to the front of the amphibious vehicle 11, and an opposite side of same is connected to the oil collection assembly. Accordingly, a position of the oil collection assembly may be varied according to the operation of the connection arms 300. In the present embodiment, the opposite side of each of the connection arms 300 is connected to the first cover plate 220 of the rotation skimmer 200.

The connection arm 300 may be composed of a plurality of rods configured to be foldable, and a hydraulic cylinder may be provided between each of the rods so as to move the rods in a direction in which the rods are moved away from or closer to each other. Accordingly, the length of the connection arm 300 may be varied by an operation of the hydraulic cylinder.

The height of the oil collection assembly may be also adjusted according to the variable length of the connection arm 300. Accordingly, when the thickness of the oil film is thick, the length of the connection arms 300 may be varied so that the oil collection assembly is moved downward. With the connection arms operated as such, more oil may be collected by the oil collection assembly.

The oil collection assembly may be selectively and simultaneously connected to an opposite side of each of the connection arms 300. To this end, the gripper having an approximately clamp shape may be provided on the opposite side of each of the connection arms 300. Each of the grippers serves to pick up a corresponding one of opposite sides at one part of the outer surface of the oil collection assembly or, in the case of the present embodiment, at one part of the outer surface of the first cover plate 220 of the rotation skimmer 200 and to couple each of the opposite sides to a corresponding one of the connection arms 300.

A detection sensor (not shown) may be provided at an inner side of the gripper. The detection sensor serves to detect which one, among the skimmers that may be coupled to the gripper, is being coupled to the gripper. The detection sensor detects which one of the first tag of the rotation skimmer 200, a second tag of the scraper skimmer 400, and a third tag of the blade skimmer 500 is being coupled to the gripper and may deliver the detected value to the controller C to be described below.

The gripper is provided on the connection arm, thereby being selectively connected to the oil collection assembly, but is not necessarily limited thereto. For example, the connection arm may be provided with an electromagnet, and the oil collection assembly may be provided with a magnetic body so that the connection arm and the oil collection assembly may even be selectively connected to each other.

Meanwhile, the oil collection assembly is provided with the scraper skimmer 400. The scraper skimmer 400 serves to collect oil or medium viscosity oil floating on the sea surface or floating on sandy beach in a direction to the transfer assembly 700.

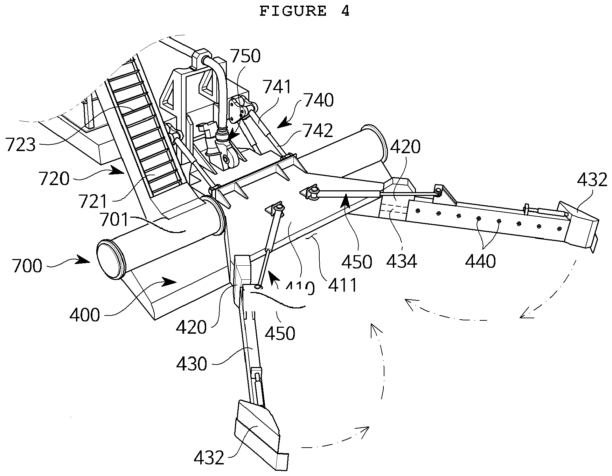

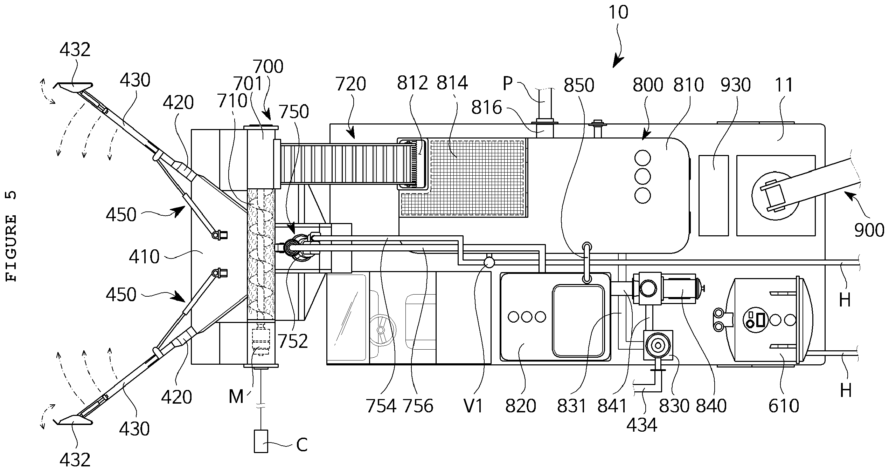

As shown in FIGS. 4 and 5, the scraper skimmer 400 is provided with a second cover plate 410. One side of the second cover plate 410 is detachably coupled to the transfer body 701 of the transfer assembly 700 to be described below. At this time, one side of the second cover plate 410 may be hinge-coupled to the transfer body 701 by a hinge pin (not shown).

In the present embodiment, the second cover plate 410 may be provided with the second tag (not shown). The second tag may be provided at a position corresponding to the gripper. Information on the scraper skimmer 400 is stored in the second tag. In the present embodiment, the second tag is RFID, but is not necessarily limited thereto.

An opening 411 is formed in the second cover plate 410. The opening 411 is formed to be open toward the front of the amphibious vehicle 11. The opening 411 and the transfer space 703 of the transfer assembly 700 communicate with each other.

At this time, an inclined transfer means (not shown) in a conveyor-type is provided between the opening 411 and the transfer space 703, so that the oil introduced through the opening 411 may be transferred to the transfer space 703.

As shown in FIG. 4, one end of each of a pair of supports 420 is connected to a corresponding one of opposite sides of the opening 411. The support 420 is extendedly formed long toward the front of the amphibious vehicle 11. Each of the support 420 serves to support a corresponding one of the sweeping arms 430 to be described below.

As shown in FIGS. 4 and 5, one end of each of the sweeping arms 430 is connected to an opposite end of a corresponding one of the supports 420. One end of each of the sweeping arms 430 may be hinge-coupled to the opposite end of the corresponding one of the supports 420, and an opposite end of each of the sweeping arms 430 may be formed to be expandable and contractible toward the front of the amphibious vehicle 11. As in the arrow direction shown in FIG. 5, each of the sweeping arms 430 may be rotated in a direction in which the opposite end thereof is moved away from or closer to each other taking the one end thereof as a reference. The sweeping arms 430 serve to collect oil.

In the present embodiment, each of the sweeping arms 430 is formed in a telescopic multistage rod shape. Accordingly, the opposite end of each of the sweeping arms 430 may be moved in a direction closer to or further away from the corresponding one of the supports 420.

A stopper 432 may be formed at the opposite end of each of the sweeping arms 430. Each of the stoppers 432 may be protrudingly formed in a direction facing each other at the opposite end of the corresponding one of the sweeping arms 430.

Each of the stoppers 432 may be coupled to the opposite end of the corresponding one of the sweeping arms 430 in an angle-adjustable manner. Each of the stoppers 432 is for preventing oil from escaping in a direction orthogonal to the longitudinal direction of the corresponding one of the sweeping arms 430.

A seawater supply pipe 434 is installed inside each of the sweeping arms 430 along the longitudinal direction of the corresponding one of the sweeping arms 430. The seawater supply pipe 434 serves to receive water supplied from the recovered oil treatment assembly 800 and to deliver the received water to each of the sweeping arms 430.

As shown in FIG. 4, each of the sweeping arms 320 is provided with the spray nozzles 440. A plurality of the spray nozzles 440 is installed to be spaced apart from each other at regular intervals on the corresponding one of the sweeping arms 430. The spray nozzles 440 are connected to the seawater supply pipe 434 and serve to spray water received from the recovered oil treatment assembly 800 to the outside. When configured as above, it is possible to induce oil to be collected into an inner side between the sweeping arms 430 by water sprayed through the spray nozzles 440.

That is, an oil recovery rate may be increased by increasing a density of the oil dispersed on the seawater surface by the sweeping arms 430 and the spray nozzles 440. In particular, the oil is collected in a width direction by moving the sweeping arms 430, and the oil is prevented from being moved to a portion out of the opposite end of each of the sweeping arms 430 by water sprayed through the spray nozzles 440, whereby the recovery rate of oil may be increased. In addition, since the oil may be collected toward the transfer assembly 700, oil collection efficiency may be further increased.

Although not shown, the spray nozzles 440 each may be installed to be angle adjustable. For example, each of the spray nozzles 440 may be formed in an articulated tube shape.

Each of interlocking members 450 is provided between the corresponding one of the sweeping arms 430 and the second cover plate 410. Each of the interlocking members 450 has a multistage rod shape having a telescopic structure and serves to move the corresponding one of the sweeping arms 430 in a direction in which the corresponding one of the sweeping arms 430 is closer to or further away from the second cover plate 410.

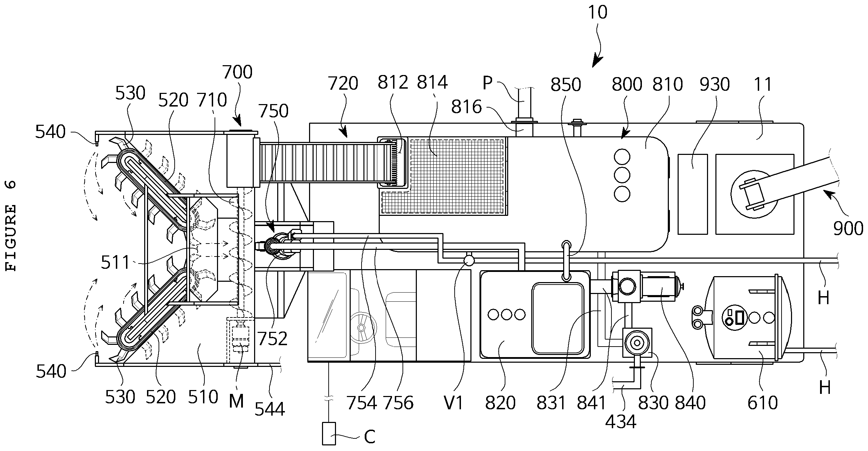

Meanwhile, as shown in FIG. 6, according to an embodiment outside the scope of the invention, the oil collection assembly may be provided with a blade skimmer 500. The blade skimmer 500 may easily collect a large amount of high viscosity floating oil using rotational force. In the present embodiment, the blade skimmer 500 may include a third cover plate 510, a pair of caterpillar conveyors 520, and a plurality of blades 530.

One side of the third cover plate 510 may be detachably coupled to the transfer body 701 of the transfer assembly 700. The third cover plate 510 may be hinge-coupled to the transfer body 701. The third cover plate 510 may be hinge-coupled to the transfer body 701 and connected to the connection arm 300 at the same time.

In the present embodiment outside the scope of the invention, the third cover plate 510 may be provided with the third tag (not shown) . The third tag may be provided at a position corresponding to the gripper. Information on the blade skimmer 500 is stored in the third tag. In the present embodiment, the third tag is RFID, but is not necessarily limited thereto.

An inlet portion 511 is formed in the third cover plate 510. The inlet portion 511 is formed to be open toward the front. The inlet portion 511 communicates with the transfer space 703 of the transfer assembly 700.

One side of each of the caterpillar conveyors 520 is located at the inlet portion 511, and an opposite side of each of the caterpillar conveyors 520 is extendedly provided in a direction away from each other. That is, viewed with reference to FIG. 6, the caterpillar conveyors 520 are disposed such that the width therebetween gradually decreases toward the inlet portion 511.

As shown in FIG. 6, the plurality of blades 530 is provided on an outer surface of the caterpillar conveyor 520. The blades 530 are provided on the outer surface of the caterpillar conveyor 520 to be spaced apart from each other at predetermined intervals and serve to collect foreign substances such as high viscosity oil and marine waste.

In the present embodiment outside the scope of the invention, one end of the blade 530 may be connected to an outer surface of the caterpillar conveyor 520, and an opposite end of same may be formed by being bent toward the inlet portion 511. This is to facilitate the movement of oil toward the inlet portion 511. The blade 530 may be made of polypropylene (PP) material that is resistant to corrosion and deformation. In addition, the blade 530 may be detachably coupled to the caterpillar conveyor 520. This is to replace only the damaged or destroyed blade 530 when the blade 530 is damaged or destroyed.

The blade skimmer 500 may be provided with a spray nozzle 540. The spray nozzle 540 may be provided on each of opposite sides in the front of the third cover plate 510. Each of the spray nozzles 540 serves to receive water supplied from the recovered oil treatment assembly 800 and spray the water. In this case, each of the spray nozzles 540 may guide the oil to move in a direction to the inlet portion 511. Therefore, the efficiency of collecting the oil may be further increased.

Each of the spray nozzles 540 may receive seawater from the seawater supply pipe 434 provided in the blade skimmer 500. In the present embodiment, the seawater supply pipe 434 may have one end connected to each of the spray nozzles 540 and an opposite end connected to an oil-water separator 830 of the recovered oil treatment assembly 800.

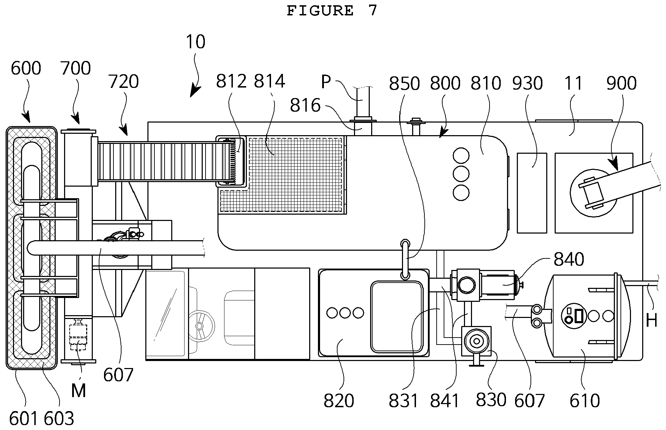

Meanwhile, as shown in FIG. 7, according to an embodiment outside the scope of the invention, the oil collection assembly may be provided with a vacuum suction skimmer 600 and a vacuum tank 610. The vacuum suction skimmer 600 may be more effectively used when recovering the floating oil, oil lumps, oil accumulated on a beach, and the like on a large scale.

The vacuum suction skimmer 600 is provided with a suction body 601. The suction body 601 may be extendedly formed in order to have a width corresponding to the width of the amphibious vehicle 11. One side of the suction body 601 may be detachably coupled to the transfer assembly. For example, one side, of the suction body 601, and the transfer assembly may be hinge-coupled by a hinge pin or the like.

The suction body 601 may be formed with a suction space (not shown). The suction space may be formed to have one side being open facing a bottom side and to be tapered in a direction in which width is gradually narrowed as approaching an upper part. This is to allow oil or the like to be easily vacuumed up along an inner surface of the suction space.

A strainer 603 may be installed at an inlet of the suction space. The strainer 603 may be slidingly coupled to the inlet of the suction space. The strainer 603 is in a form of a mesh net and is to prevent foreign substances, which have a diameter larger than a diameter of a vacuum suction pipe 607 connecting the outlet of the suction space and the vacuum tank 610, from passing therethrough.

In the present embodiment outside the scope of the invention, the outlet of the suction space and the vacuum tank 610 are connected by the vacuum suction line 607. That is, the vacuum suction line 607 has one end connected to the outlet of the suction space and an opposite end connected to the vacuum tank 610.

The vacuum tank 610 may deliver vacuum suction force to the vacuum suction skimmer 600, thereby vacuuming up adhesion oil, accumulation oil, high viscosity oil, and the like. At the same time, the vacuum tank 610 may discharge the adhesion oil, low viscosity oil, high viscosity oil, and the like, which have been vacuumed up, to a first oil storage tank 810 or to the outside, for example, a separate loading vehicle. To this end, the vacuum tank 610 may be installed with a motor (not shown), an electric box (not shown), and the like and may be connected to an external discharge hose H connected to the outside.

As shown in FIG. 1, the vacuum tank 260 may have a portable nozzle 262 connected thereto. A portable nozzle 612 may be disposed on any one of sides of the amphibious vehicle 11 according to the convenience of a user. The portable nozzle 612 is directly gripped and used by the user and is to vacuum up and remove oil, which is in a narrow space that the oil collection assembly does not reach or in a location such as on rocks and the like that the amphibious vehicle 11 has difficulty moving on.

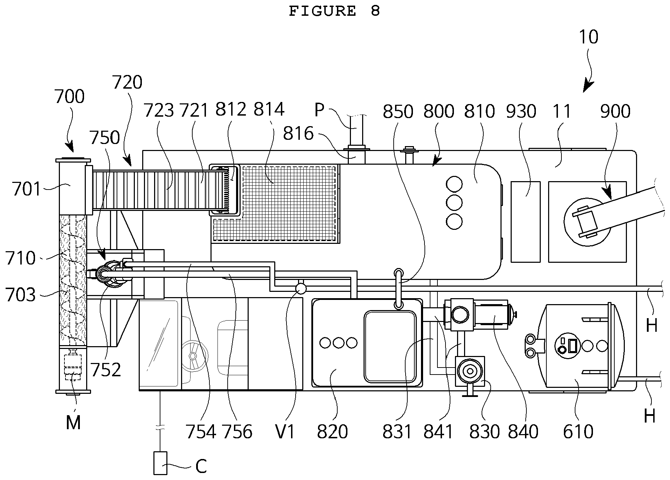

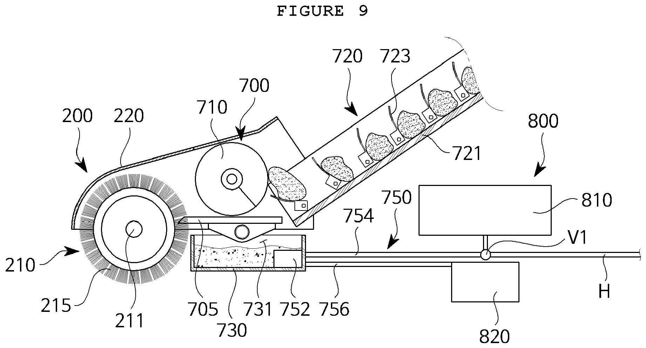

Meanwhile, the transfer assembly 700 is disposed in the front of the amphibious vehicle 11. As shown in FIGS. 8 and 9, the transfer assembly 700 serves to transfer the oil collected from the oil collection assembly to the recovered oil treatment assembly 800.

As shown in FIG. 8, the exterior and skeleton of the transfer assembly 700 are formed by the transfer body 701. The transfer body 701 may be formed in a substantially cylindrical shape. In the present embodiment, the transfer body 701 is a part connected to the oil collection assembly. The transfer body 701 may be interlocked together with the oil collection assembly according to the up and down movement of the oil collection assembly.

A transfer space 703 may be formed inside the transfer body 701. The transfer space 703 is formed to have one side open toward the front. The transfer space 703 is a part into which oil and foreign substances received from the oil collection assembly are introduced.

As shown in FIGS. 8 and 9, the transfer space 703 may be provided with a partition plate 705. A guide screw 710 to be described below is disposed at a position above the partition plate 705, and a transfer pump assembly 750 is disposed at a position below the partition plate 705. In the present embodiment, one side, facing the rotation roller 213, of the partition plate 705 may be formed in a saw blade shape. This is to scrape and desorb adhered oil, solid oil, high viscosity oil, and the like, which are adhered to the brush 215. The adhered oil, solid oil, high viscosity oil, and the like, which are desorbed from the partition plate 705, are moved to the skimmer conveyor 720 to be described below.

In the present embodiment, the partition plate 705 may be formed with a plurality of filter holes 707 therethrough. This is to allow water and low viscosity oil to pass through the filter holes 707 to be discharged to the bottom portion of the partition plate 705. The partition plate 705 may be made of a PP material that is resistant to corrosion and deformation.

A guide screw 710 may be rotatably installed in the transfer space 703. The guide screw 710 is installed in a direction parallel to the rotation roller 213. The guide screw 224 is substantially a spiral shape and serves to transfer the solid oil and foreign substances inside the transfer space 703 from one side to an opposite side direction. In the present embodiment, the solid oil, marine waste, other foreign substances, and the like transferred by the guide screw 710 are delivered to the skimmer conveyor 720.

The guide screw 710 is connected to a drive shaft of a motor M. Accordingly, since the motor M rotates by receiving a rotational force, when the rotational speed of the motor M is varied, the rotational speed of the guide screw 710 may also be varied. That is, the rotational speed of the guide screw 710 may be varied according to the amount of oil to be recovered. The rotational speed of the motor M is controlled by the controller C, which will be described below.

The transfer assembly 700 is provided with a skimmer conveyor 720. The skimmer conveyor 720 serves to transfer the solid oil, marine waste, other foreign substances, and the like transferred from the guide screw 710 to the first oil storage tank 810 of the recovered oil treatment assembly 800 to be described below. As shown in FIG. 9, the skimmer conveyor 720 may include a belt part 721 and transfer plates 723.

The belt part 721 has one side connected to the transfer body 701 and an opposite side connected to the recovered oil treatment assembly 800. While circulating between the transfer body 701 and the recovered oil treatment assembly 800, the belt part 721 serves to transfer the oil received from the guide screw 710 to the recovered oil treatment assembly 800.

In the present embodiment, the belt part 721 is configured to rotate together with a front roller (not shown) and a rear roller (not shown) in a state of surrounding the front roller rotatably positioned in the transfer body 701 and the rear roller positioned in the amphibious vehicle 11. In the present embodiment, the belt part 721 may be made of a fiber of a lipophilic material, that is, synthetic fiber such as polyester, polypropylene, or the like or nonwoven fabric having porosity using natural material such as sawdust, wool, bark, and the like.

As shown in FIG. 9, one end of the transfer plate 723 may be hinge-coupled to the belt part 721 and an opposite end of same may be a free end. Configured as above, the transfer plate 723 may be rotated to have the opposite end thereof to be brought to a position adjacent to the guide screw 710, thereby allowing the solid oil, marine waste, other foreign substances, and the like to be easily delivered thereto. Subsequently, the transfer plate 723 may support the solid oil, marine waste, other foreign substances, and the like having been delivered thereto by being rotated with a shape being orthogonal from the outer surface of the belt part 721.

A lower end of the skimmer conveyor 720 may be provided to be expandable and contractible in a telescopic way. Here, the lower end of the skimmer conveyor 720 may be operated by being interlocked with the transfer body 701. That is, the lower end of the skimmer conveyor 720 may expand and contract according to the up and down movement of the transfer body 701.

As shown in FIG. 9, a tray 730 may be installed at a lower part of the transfer body 701. The tray 730 may be located below the partition plate 705.

An accommodation space 731 is formed inside the tray 730. The accommodation space 731 is a part in which oil dropped from the bottom portion of the partition plate 705, that is, the oil, water, and the like that are dropped passing through the filter holes 707, is accommodated.

In addition, a transfer pump 752 to be described below is disposed inside the tray 730. Accordingly, the transfer pump 752 may transfer the oil and water inside the accommodation space 731 to the recovered oil treatment assembly 800 or to the outside.

Meanwhile, as shown in FIG. 4, the transfer assembly 700 may be moved in an up and down direction by a plurality of elevating members 740. Each of the elevating member 740 may include an elevating cylinder 741 and an extender 742. Each of the elevating cylinders 741 is installed at a position, a corresponding one of positions corresponding to opposite ends of the transfer body 701, in the amphibious vehicle 11. In addition, one side of each of the extenders 742 is connected to the corresponding one of the opposite ends of the transfer body 701, and an opposite side of same is installed so as to move up and down in the corresponding one of the elevating cylinders 741. Each of the elevating members 740 is for being moved interlocked with the oil collection assembly according to the up and down movement of the oil collection assembly.

Meanwhile, the transfer pump assembly 750 is connected to the transfer assembly 700. The transfer pump assembly 750 serves to deliver the oil to the recovered oil treatment assembly 800 or transfer oil to the outside.

The transfer pump assembly 750 is provided with the transfer pump 752. The transfer pump 752 is located inside the tray 730, as shown in FIGS. 5 and 6 and FIGS. 8 and 9. The transfer pump 752 serves to transfer oil and water dropped from the bottom portion of the partition plate 705 to the recovered oil treatment assembly 800 or to the outside, for example, an external discharge hose H. At this time, the oil dropped from the bottom portion of the partition plate 705 is relatively low viscosity oil, and the water is seawater.

The transfer pump assembly 750 may include a first transfer line 754 and a second transfer line 756. This is to allow the oil to be directly transferred to the outside without passing through the recovered oil treatment assembly 800 when oil to be removed and recovered through the transfer pump 752 has a specific property or is a large amount.

One end of the first transfer line 754 is connected to the transfer pump 752, and an opposite end of same is selectively connected to the first oil storage tank 810 to be described below or an external discharge hose H delivered from the outside. Here, the external discharge hose H is a hose connected to an oil recovery tank 860 to be described below, but is not necessarily limited thereto. For example, the external discharge hose may be a hose connected to a separate loading vehicle.

To this end, a valve V1 may be provided at the opposite end of the first transfer line 754. The valve V1 may be selectively connected to the first oil storage tank 810 or the external discharge hose H in a state of being connected to the first transfer line 754. That is, the oil passing through the first transfer line 754 may be discharged to the outside or moved to the first oil storage tank 810 through the external discharge hose H by the control of the valve V1.

One end of the second transfer line 756 may be connected to the transfer pump 752 and an opposite end of same may be connected to a second oil storage tank 820 to be described below. That is, the second transfer line 756 serves as a passage for guiding oil, water, and the like to move to the second oil storage tank 820. In the present embodiment, a control valve (not shown) may be connected to one end of the second transfer line 756 so that the second transfer line 756 may even be opened or closed according to a type of oil to be removed and recovered, for example, high viscosity oil, low viscosity oil, or the like.

On the other hand, the multifunctional system 10 for recovering high viscosity oil flowing onto and adhered to the shore is provided with a recovered oil treatment assembly 800. In the present embodiment, the recovered oil treatment assembly 800 serves to selectively accommodate oil recovered from the oil collection assembly, separate water from the accommodated oil and stores the separated oil, and supply some of the water separated from the oil to the scraper skimmer 400 or the blade skimmer 500.

Here, the reason why the recovery oil treatment assembly 800 selectively accommodates the oil recovered from the oil collection assembly is to allow the oil to be transferred directly, for example, through the external discharge hose H, to the outside without being accommodated in the recovery oil treatment assembly 800 when the oil recovered by the transfer assembly and the transfer pump assembly is a large amount.

The recovered oil treatment assembly 800 may include the first oil storage tank 810, the second oil storage tank 820, the oil-water separator 830, an oil recovery line 831, a supply pump 840, and a floating oil transfer line 850.

The first oil storage tank 810 may accommodate the oil recovered from the transfer pump 752 and the skimmer conveyor 720. The first oil storage tank 810 is a part loaded on the amphibious vehicle 11.

An upper inlet 812 may be formed at a top of the first oil storage tank 810. The upper inlet 812 serves as an entrance through which the oil delivered from the skimmer conveyor 720 is introduced.

As shown in FIGS. 5, 6, and 9, a mesh screen box 814 may be detachably provided on an inner upper side, facing the upper inlet 812, of the first oil storage tank 810. The mesh screen box 814 is manufactured as a box in a form of a mesh and serves to primarily filter out bulky tar lumps, other foreign substances, and the like among oil delivered from the skimmer conveyor 720.

Since the mesh screen box 814 is detachably provided, when the mesh screen box 814 is full of tar lumps, other foreign substances, and the like, by using a crane 900 to be described below and the like, the contents may be emptied by moving the mesh screen box 814 to the outside, and an empty mesh screen box 814 may be installed on the inner upper side of the first oil storage tank 810. To this end, a guide rib (not shown) is protrudingly provided at an outer lower end of the mesh screen box 814, and a support rib (not shown) by which the guide rib is caught and supported may even be formed inside the first oil storage tank 810.

An inlet (not shown) may be formed at one side of the first oil storage tank 810. The inlet serves as an entrance through which the oil delivered from the vacuum tank 610 is introduced.

An outlet 816 may be formed at an opposite side of the first oil storage tank 810. The oil, foreign substances, and the like stored inside the first oil storage tank 810 are discharged to the outside through the outlet 816. The outlet 816 may be selectively connected to an external discharge pipe P, an external discharge hose H, or the like of a separate loading vehicle to be described below.

The second oil storage tank 820 is a part in which the oil and water recovered from the second transfer line 756 are accommodated. The second oil storage tank 820 is a part that accommodates the floating oil in addition to the seawater vacuumed up together when the floating oil is vacuumed up and may store the oil having a viscosity relatively lower than the oil stored in the first oil storage tank 810.

As shown in FIGS. 5, 6, and 9, an oil-water separator 830 is connected to the second oil storage tank 820. The oil-water separator 830 is connected to the second oil storage tank 820 and serves to separate water from the recovered oil. That is, the oil-water separator 830 is a device that collects oil separately by separating a mixture of the recovered oil and water and mainly separates oil and water using a gravity method or centrifugation, which uses a difference in density. In the present embodiment, the oil and water may be separated from each other by centrifugation.

The oil-water separator 830 and the lower portion of the first oil storage tank 810 may be connected to each other by an oil recovery line 831 therebetween. The oil recovery line 831 serves to transfer the oil separated from the oil-water separator 830 to the first oil storage tank 810 therethrough.

The second oil storage tank 820 and the oil-water separator 830 may be connected to each other by a supply line 841 provided at the supply pump 840. That is, a mixture of the oil and water is moved from the second oil storage tank 820 to the oil-water separator 830 through the supply line 841 by the driving of the supply pump 840.

The oil-water separator 830 may be connected to the seawater supply pipe 434. The water separated from the oil-water separator 830 is moved to the seawater supply pipe 434. Therefore, even without mounting a separate water tank to supply water to the spray nozzle 440 of the scraper skimmer 400, water may be supplied from the oil-water separator 830, whereby not only the number of parts may be reduced but also cost and time may be reduced.

Meanwhile, although not shown, a sensing unit may be provided on an upper inner wall of each of the first oil storage tank 810 and the second oil storage tank 820. Each of the sensing units is intended to detect a level of the oil and a level of the water accommodated together with the oil, in a corresponding one of the first oil storage tank 810 and the second oil storage tank 820.

A level value detected by the sensing unit may be transmitted to the controller C. In this case, the controller C compares a preset value with the level value transmitted from the sensing unit and may stop the operation of the oil collection assembly when the level value is no less than the preset value.

As shown in FIGS. 5 to 8, the floating oil transfer line 850 is provided between upper portions of both the first oil storage tank 410 and the second oil storage tank 430. The floating oil transfer line 850 connects between the upper portions of both the first oil storage tank 810 and the second oil storage tank 820, thereby serving as a passage to guide the oil floating on the upper portion of the second oil storage tank 820 to move to the first oil storage tank 810.

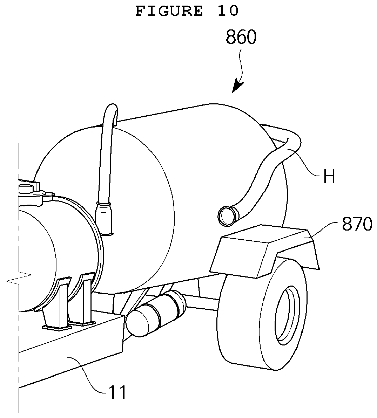

Meanwhile, as shown in FIG. 10, the multifunctional system 10 for recovering high viscosity oil flowing onto and adhered to the shore may be provided with the oil recovery tank 860. In the present embodiment, the oil recovery tank 860 is provided on a top portion of a trailer 870 that is moved by the traction of the amphibious vehicle 11, but is not necessarily limited thereto. For example, the oil recovery tank 860 may be mounted even on the amphibious vehicle 11. The oil recovery tank 860 may store the oil and the like transferred from the first oil storage tank 810, the second oil storage tank 820, and the vacuum tank 610 by being connected to the external discharge hose H or the like. When the oil recovery tank 860 is full of the oil and the like, the oil recovery tank 860 only may be quickly replaced by separating the trailer 870 only, whereby a large amount of oil may be processed in a short period of time.

Meanwhile, as shown in FIGS. 5 to 8 and FIG. 11, the crane 900 may be provided on the multifunctional system 10 for recovering high viscosity oil flowing onto and adhered to the shore. The crane 900 is installed on one side of a top portion of the amphibious vehicle 11. The crane 900 may be located variably according to the arrangement of the recovered oil treatment assembly 800. The crane 900 may be installed at a location that is variable according to the location of the loads to be installed such as the first oil storage tank 810, the second oil storage tank 820, and the like. The crane 900 may be operated by receiving power from a power transmission unit 930 to be described below.

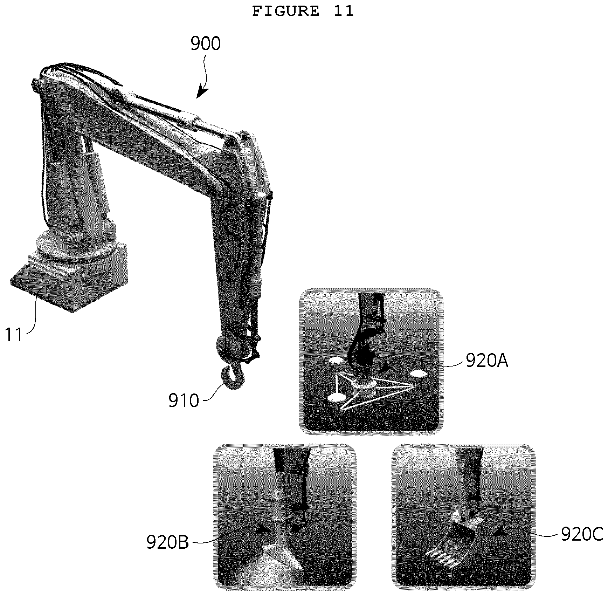

As shown in FIG. 11, the crane 900 may be provided with a hook member 910 at one end thereof. Various work tools and equipment, for example, an oil skimmer 920A for vacuuming up and recovering oil spilled on the sea; a separate vacuum suction member 920B; a bucket 920C capable of holding a lump of spilled oil, a lump of solidified oil, and the like in addition to the portable nozzle 262; or the like may be selectively coupled to the hook member 910 by being hooked as necessary. In the present embodiment, the mesh screen box 814 may be moved to the outside with one side thereof being hooked on the hook member 910. In this way, while supporting working so as to be suitable to a field situation, working may be done by replacing work tools and equipment for recovering various types of oil to the hook member 910 of the crane 900, thereby improving workability.

Meanwhile, the multifunctional system 10 for recovering high viscosity oil flowing onto and adhered to the shore may be provided with the power transmission unit 930. The power transmission unit 930 is installed on the amphibious vehicle 11. The power transmission unit 930 serves to supply power to the oil collection assembly, the transfer assembly 700, the transfer pump assembly 750, and the recovered oil treatment assembly 800.

In the present embodiment, the power transmission unit 930 may be connected to the controller C. The controller C serves to control the operation of the oil collection assembly, the transfer assembly 700, the transfer pump assembly 750, and the recovered oil treatment assembly 800. In addition, the controller C also serves to control the operation of the connection arm 300 and the gripper. In the present embodiment, the controller C may be provided in the driver's seat of the amphibious vehicle 11.

In the present embodiment, the controller C receives a value from the detection sensor S having detected the value and operates the corresponding skimmer with the corresponding value. For example, when the detected value sensed by the detection sensor S is about the first tag of the rotation skimmer 200, the information of the rotation skimmer 200 is transmitted to the controller C, and the controller C receives the information and operates the rotating skimmer 200. In this case, there is an advantage of being able to conveniently work without a separate work setting.

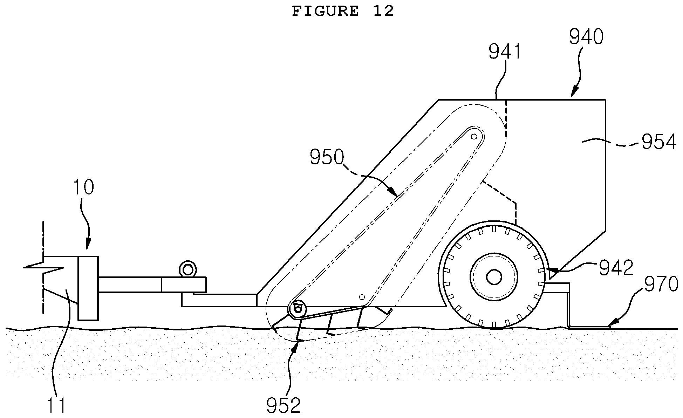

On the other hand, as shown in FIG. 12, collection equipment 940 for waste flowing onto the shore may be detachably coupled to the rear of the amphibious vehicle 11. The collection equipment 940 for waste flowing onto the shore may be used along with other equipment to remove and collect the waste that flows from the sea onto the shore, and may also be used alone to maintain and clean the sandy beach of a bathing beach.

On the sandy beach of the bathing beach, large and small waste is generated by large-scale visitors during the summer vacation period. In addition, household waste that is pushed to the sea during natural disasters such as floods and typhoons is often pushed back to the beach and buried in the sandy beach. In this case, it may even easily clean the sandy beach of the bathing beach using only the collection equipment 940 for waste flowing onto the shore.

In the present embodiment, the collection equipment 940 for waste flowing onto the shore may collect the waste on the shore and the beach while the transfer conveyor 950 to which a plurality of rakes 952 are attached rotates.

The exterior and skeleton of the collection equipment 940 for waste flowing onto the shore may be formed by an equipment body 941. Front and upper portions of the equipment body 941 may be formed to be open.

The equipment body 941 may be selectively connected to the amphibious vehicle 11 by a traction unit (not shown). The traction unit may include a connection rod and a connection ring into which the connection rod is inserted, but is not limited thereto.

A plurality of wheels 942 is rotatably installed at the equipment body 941. The wheels 942 may be formed in a shape of a tractor wheel or a caterpillar track so as not to sink to the sandy beach.

A transfer conveyor 950 may be installed in the front of the equipment body 941. The transfer conveyor 950 may be rotatably installed in the same direction as the driving direction of the amphibious vehicle 11. Here, the transfer conveyor 950 may be configured to continuously move inclinedly downward forward and then upward rearward at the front of the equipment body 941. This is to transfer the waste to a collection unit 954 located at the rear of the equipment body 941. That is, the waste transferred from the transfer conveyor 950 may fall into and be collected in the collection unit 954.

A plurality of through holes (not shown) may be formed in the transfer conveyor 950. The through hole is a hole for sand to escape therethrough.

The transfer conveyor 950 may receive power by a separate power member (battery, motor, and the like) mounted on the equipment body 941, but is not limited thereto. For example, the transfer conveyor 950 may receive power from the power transmission unit 930.

A plurality of rakes 952 may be provided on an outer surface of the transfer conveyor 950. The rake 952 may be provided to extend to a predetermined length in a vertical direction from the outer surface of the transfer conveyor 950. The rakes 952 may be arranged in a zigzag pattern. This is to more easily recover various waste such as cigarette butts, waste fishing gear, waste nets, tree branches, and the like. Intervals between the rakes 952 may be adjusted. The rake 952 serves to collect waste buried or placed on the sandy beach by scraping off the sandy beach of the shore and the beach.

In the present embodiment, the rake 952 is substantially a rod shape, but is not necessarily limited thereto. The rake 952 may be formed in a screw shape, and may be used along with a rod shape at the same time.

The collection unit 954 is provided at the rear of the equipment body 941. The collection unit 954 is a portion in which the waste received from the transfer conveyor 950 is fallen and collected. In the present embodiment, the collection unit 954 is provided integrally with the equipment body 941, but is not necessarily limited thereto. For example, the collection unit 954 may be detachably installed on the equipment body 941. This is to allow the collection unit 954 to be replaced with another collection unit 954 when the collection unit 954 is full of the collected waste.

A scratcher (not shown) may be provided at the entrance of the collection unit 954 facing the transfer conveyor 950. The scratcher is for separating the waste and the like caught in the rake 952. The scratcher may be formed in an approximately serrated shape.

A flat plate 970 may be provided at the rear lower end of the equipment body 941. The flat plate 970 has an approximately rectangular flat plate shape and serves to rearrange the sandy beach to be flat after the collection equipment 940 for waste flowing onto the shore passes.

According to the present embodiment configured as above, being mounted on the amphibious vehicle 11 capable of moving on the neritic zone and land, the system of the present disclosure may remove and recover the high or low viscosity oil flowing onto, or the high viscosity oil adhered to, the shore or the neritic zone and land while moving freely around the shoreline or the neritic zone and land. Therefore, it is possible to remove a large amount of oil within a short period of time, reduce the time and cost required for an oil pollution control work, and work safely.

In addition, according to characteristics of the oil flowing onto and adhered to the shore, the working environment, and the like, the oil may be removed and recovered by replacing and using the rotation skimmer 200, the scraper skimmer 400, the blade skimmer 500, the vacuum suction skimmer 600, or the like. Therefore, it is possible to efficiently perform the oil pollution control work.

In addition, the recovered oil treatment assembly 800, in which the oil recovered from the oil collection assembly is accommodated and which is capable of storing the separated oil by separating water from the accommodated oil, may be mounted on the amphibious vehicle 11, thereby allowing the recovered oil to be stored therein in an urgent situation so that an emergency response may even be made. In addition, since a large amount of oil recovered and removed with the oil collection assembly may be stored directly in a separate loading vehicle, for example, an oil recovery tank 860, without passing through an oil storage tank in the vehicle, a large amount of oil may be processed in a short period of time.

In addition, the water separated from oil through the oil-water separator 830 may be supplied to the spray nozzles 440 of the scraper skimmer 400 or the spray nozzles 540 of the blade skimmer 500. Therefore, the system does not require installation of a pump and the like to supply seawater and the like to the scraper skimmer 400 or the blade skimmer 500, so the number of parts may be reduced, and cost and time may be reduced.

## Claims

1. A multifunctional system (10) for recovering high viscosity oil flowing onto and adhered to a shore, which removes and recovers oil flowing onto a shore from the sea or oil adhered to the shore by being mounted on an amphibious vehicle (110 that is capable of moving on a neritic zone and land, the system comprising:
an oil collection assembly detachably coupled to the front of the amphibious vehicle (11) and configured to collect oil;
a recovered oil treatment assembly (800) mounted on a top portion of the amphibious vehicle and configured to selectively receive the oil collected from the oil collection assembly and separate water from the received oil through an oil-water separator (830);
a transfer assembly (700) connected to the oil collection assembly and configured to transfer the oil collected from the oil collection assembly to the recovered oil treatment assembly (800); and
a transfer pump assembly (700) connected to the transfer assembly (700) and configured to transfer the oil to the recovered oil treatment assembly (800) or to the outside
wherein the oil collection assembly comprises a scraper skimmer (400) configured to collect the oil in a direction to the transfer assembly (700) by being movably provided in a direction in which an opposite end of one side thereof is moved away from or closer to an opposite end of an opposite side thereof with the one end of the one side thereof and the one end of the opposite side thereof as references, respectively; wherein the scraper skimmer (400) comprises:
a second cover plate (410) having one side coupled to the transfer assembly (700) and formed with an opening (411) open toward a front;
a pair of supports (420) having one end connected to a corresponding one of opposite sides of the opening (411);
sweeping arms (430) each having one end hinge-coupled to an opposite end of the corresponding support (420), and an opposite end being stretchably formed toward a front of the amphibious vehicle (11), thereby collecting the oil;
a seawater supply pipe (434) installed inside each of the sweeping arms (430) along a longitudinal direction of same and configured to receive water supplied from the recovered oil treatment assembly (800) and transfer the received water to each of the sweeping arms (430); and
a plurality of spray nozzles (440) installed at regular intervals on one surface of each of the sweeping arms (430) facing each other, connected to the seawater supply pipe (434), and configured to spray the water received from the seawater supply pipe (434) to the outside, thereby inducing the oil;
wherein each of interlocking members (450) is provided between the corresponding one of the sweeping arms (430) and the second cover plate (410),
wherein each of the interlocking members (450) has a multistage rod shape having a telescopic structure configured to move the corresponding one of the sweeping arms (430) in a direction in which the corresponding one of the sweeping arms (430) is closer to or further away from the second cover plate (410) .

2. The system of claim 1, further comprising:
a pair of connection arms (300) provided in directions parallel to each other in the front of the amphibious vehicle (11), each of the arms (300) having one side hinge-coupled to the front side of the amphibious vehicle (11) and an opposite side connected to an oil collection assembly,
wherein the opposite side of each of the arms (300) is selectively coupled to the oil collection assembly.

3. The system of claim 1, wherein the transfer assembly (700) comprises:
a transfer body (701) formed with a transfer space (703), having one side open toward a front and being introduced with the oil and foreign substances transferred from the oil collection assembly introduced therein;
a guide screw (710) configured to transfer the oil and the foreign substances inside the transfer space (703) from one side to an opposite side by being rotatably installed in the transfer space (703);
a skimmer conveyor (720) configured to transfer the oil and the foreign substances received from the guide screw (710) to the recovered oil treatment assembly (800); and
a tray located (730) at a lower part of the transfer body (701) and formed with an accommodation space (731) being accommodated with the oil and water dropped from a bottom of a partition plate (705).

4. The system of claim 3, wherein the recovered oil treatment assembly further comprises:
a first oil storage tank (810) configured to accommodate the oil transferred from the transfer assembly (700) or the transfer pump assembly (750);
a second oil storage tank (820) configured to accommodate the oil and water recovered from the transfer assembly (700);
the oil-water separator (830) configured to separate water from the recovered oil by being connected to the second oil storage tank (820), discharge the separated water to the outside, and supply the separated oil to the first oil storage tank (810); and
an oil recovery line (841) configured to transfer the oil separated from the oil-water separator (830) to the second oil storage tank (820) by connecting the oil-water separator (830) and second oil storage tank (820).

5. The system of claim 4, wherein the transfer pump assembly (750) comprises:
a transfer pump (752) located inside the tray (730), thereby being configured to pump oil and water accommodated in the accommodation space (731) and to transfer the oil and water to the recovered oil treatment assembly (800) or to the outside;
a first transfer line (754) having one end connected to the transfer pump (752) and an opposite end selectively connected to either one of the first oil storage tank (810) and an external discharge hose (H) transferred from the outside; and
a second transfer line (756) having one end connected to the transfer pump (752) and an opposite end connected to the second oil storage tank (820).

6. The system of claim 5, wherein the transfer pump assembly (750) further comprises a floating oil transfer line (850) configured to transfer the oil floating on an upper portion of the second oil storage tank (820) to the first oil storage tank (810) by connecting upper portions of the first oil storage tank (810) and the second oil storage tank (820).

7. The system of claim 1, wherein each of the sweeping arms (430) is provided with a stopper (432), protrudingly formed in a direction facing each other at the opposite end of the corresponding one of the sweeping arms (430).

8. The system of claim 7, wherein each of the stoppers 9432) is coupled to the opposite end of the corresponding one of the sweeping arms (430) in an angle-adjustable manner.

9. The system of claim 2, further comprising one or more oil collection assemblies selected from a rotation skimmer (200), a blade skimmer (500) and a vacuum suction skimmer (600)

10. The system of claim 1, further comprising:
equipment (940)for collecting waste flowing onto the shore configured to collect waste on the shore and the beach while rotating a transfer conveyor (942) having a plurality of rakes (952) by being detachably coupled to the rear of the amphibious vehicle (11).

## Patentansprüche

1. Multifunktionelles System (10) zur Rückgewinnung von an ein Ufer strömendes und daran haftendes hochviskoses Öl, das an ein Ufer strömendes Öl aus dem Meer oder an dem Ufer haftendes Öl entfernt und zurückgewinnt, indem es auf einem Amphibienfahrzeug (110) angebracht ist, das sich in einer neritischen Zone und an Land bewegen kann, wobei das System umfasst:
eine Ölsammelanordnung, die lösbar mit der Vorderseite des Amphibienfahrzeugs (11) gekoppelt und zum Sammeln von Öl ausgelegt ist;
eine Rückgewinnungsölbehandlungsanordnung (800), die an einem oberen Abschnitt des Amphibienfahrzeugs befestigt und dazu ausgelegt ist, das aus der Ölsammelanordnung gesammelte Öl selektiv zu empfangen und Wasser aus dem empfangenen Öl durch einen ÖI-Wasser-Trenner (830) zu trennen;
eine Förderanordnung (700), die mit der Ölsammelanordnung verbunden und dazu ausgelegt ist, das aus der Ölsammelanordnung gesammelte Öl zur Rückgewinnungsölbehandlungsanordnung (800) zu fördern; und
eine Förderpumpenanordnung (700), die mit der Förderanordnung (700) verbunden und dazu ausgelegt ist, das Öl zur Rückgewinnungsölbehandlungsanordnung (800) oder nach außen zu fördern;
wobei die Ölsammelanordnung einen Schabeskimmer (400) umfasst, der dazu ausgelegt ist, das Öl in einer Richtung zur Förderanordnung (700) zu sammeln, indem er bewegbar in einer Richtung vorgesehen ist, in der ein entgegengesetztes Ende einer Seite desselben von einem entgegengesetzten Ende einer entgegengesetzten Seite desselben weg oder näher zu einem entgegengesetzten Ende einer entgegengesetzten Seite desselben bewegt wird, wobei das eine Ende der einen Seite desselben und das eine Ende der entgegengesetzten Seite desselben jeweils als Referenzen dienen; wobei der Schabeskimmer (400) umfasst:
eine zweite Abdeckplatte (410), die eine Seite aufweist, die mit der Förderanordnung (700) gekoppelt ist und mit einer Öffnung (411) ausgebildet ist, die zu einer Vorderseite hin offen ist;
ein Paar von Stützen (420), die ein Ende aufweisen, das mit einer entsprechenden der gegenüberliegenden Seiten der Öffnung (411) verbunden ist;
Schwenkarme (430), die jeweils ein Ende aufweisen, das mit einem gegenüberliegenden Ende der entsprechenden Stütze (420) gelenkig gekoppelt ist, und ein gegenüberliegendes Ende, das dehnbar in Richtung einer Vorderseite des Amphibienfahrzeugs (11) ausgebildet ist, wodurch das Öl aufgenommen wird;
ein Meerwasserzufuhrrohr (434), das innerhalb jedes der Schwenkarme (430) entlang einer Längsrichtung desselben installiert ist und dazu ausgelegt ist, aus der Rückgewinnungsölbehandlungsanordnung (800) zugeführtes Wasser zu empfangen und das empfangene Wasser zu jedem der Schwenkarme (430) zu fördern; und
eine Vielzahl von Spritzdüsen (440), die in regelmäßigen Abständen auf einer Fläche jedes der einander zugewandten Schwenkarme (430) installiert, mit dem Meerwasserzufuhrrohr (434) verbunden und dazu ausgelegt sind, das aus dem Meerwasserzufuhrrohr (434) empfangene Wasser nach außen zu spritzen, wodurch das Öl eingeleitet wird;
wobei Verriegelungselemente (450) jeweils zwischen dem entsprechenden der Schwenkarme (430) und der zweiten Abdeckplatte (410) vorgesehen sind, wobei jedes der Verriegelungselemente (450) eine mehrstufige Stangenform mit einer teleskopischen Struktur aufweist, die dazu ausgelegt ist, den entsprechenden der Schwenkarme (430) in eine Richtung zu bewegen, in der der entsprechende der Schwenkarme (430) näher an die zweite Abdeckplatte (410) heran oder weiter von ihr weg ist.

2. System nach Anspruch 1, ferner umfassend:
ein Paar von Verbindungsarmen (300), die in zueinander parallelen Richtungen an der Vorderseite des Amphibienfahrzeugs (11) vorgesehen sind, wobei jeder der Arme (300) eine Seite, die gelenkig mit der Vorderseite des Amphibienfahrzeugs (11) gekoppelt ist, und eine gegenüberliegende Seite aufweist, die mit einer Ölsammelanordnung verbunden ist,
wobei die gegenüberliegende Seite jedes der Arme (300) selektiv mit der Ölsammelanordnung gekoppelt ist.

3. System nach Anspruch 1, wobei die Förderanordnung (700) umfasst:
einen Förderkörper (701), der mit einem Förderraum (703) ausgebildet ist, wobei eine Seite nach vorne hin offen ist und mit dem aus der dort eingeführten Ölsammelanordnung geförderten Öl und den Fremdstoffen beaufschlagt wird;
eine Führungsschnecke (710), die zum Fördern des Öls und der Fremdstoffe innerhalb des Förderraums (703) von einer Seite zu einer gegenüberliegenden Seite ausgelegt ist, indem sie drehbar im Förderraum (703) eingebaut ist;
einen Skimmer-Förderer (720), der dazu ausgelegt ist, das aus der Führungsschnecke (710) empfangene Öl und die Fremdstoffe zur Rückgewinnungsölbehandlungsanordnung (800) zu fördern; und
eine Wanne (730), die sich an einem unteren Bereich des Förderkörpers (701) befindet und mit einem Aufnahmeraum (731) ausgebildet ist, in dem das von der Unterseite einer Trennplatte (705) herabtropfende Öl und Wasser aufgenommen wird.

4. System nach Anspruch 3, wobei die Rückgewinnungsölbehandlungsanordnung ferner umfasst:
einen ersten Ölspeichertank (810), der dazu ausgelegt ist, das aus der Förderanordnung (700) oder der Förderpumpenanordnung (750) geförderte Öl aufzunehmen;
einen zweiten Ölspeichertank (820), der dazu ausgelegt ist, das aus der Förderanordnung (700) zurückgewonnene Öl und Wasser aufzunehmen;
der Öl-Wasser-Trenner (830) dazu ausgelegt ist, Wasser aus dem zurückgewonnenen Öl zu trennen, indem er mit dem zweiten Ölspeichertank (820) verbunden ist, das abgetrennte Wasser nach außen ableitet und das abgetrennte Öl dem ersten Ölspeichertank (810) zuführt; und
eine Ölrückgewinnungsleitung (841), die dazu ausgelegt ist, das aus dem Öl-Wasser-Trenner (830) getrennte Öl durch Verbinden des Öl-Wasser-Trenners (830) und des zweiten Ölspeichertanks (820) zum zweiten Ölspeichertank (820) zu fördern.

5. System nach Anspruch 4, wobei die Förderpumpenanordnung (750) umfasst:
eine Förderpumpe (752), die sich im Inneren der Wanne (730) befindet und dazu ausgelegt ist, im Aufnahmeraum (731) aufgenommenes Öl und Wasser zu pumpen und das Öl und Wasser zur Rückgewinnungsölbehandlungsanordnung (800) oder nach außen zu fördern;
eine erste Förderleitung (754), die ein Ende, das mit der Förderpumpe (752) verbunden ist, und ein gegenüberliegendes Ende aufweist, das wahlweise entweder mit dem ersten Ölspeichertank (810) oder mit einem von außen zugeführten Ablassschlauch (H) verbunden ist; und
eine zweite Förderleitung (756), die ein Ende, das mit der Förderpumpe (752) verbunden ist, und ein gegenüberliegendes Ende aufweist, das mit dem zweiten Ölspeichertank (820) verbunden ist.

6. System nach Anspruch 5, wobei die Förderpumpenanordnung (750) ferner eine Förderleitung (850) für schwimmendes Öl umfasst, die dazu ausgelegt ist, das auf einem oberen Abschnitt des zweiten Ölspeichertanks (820) schwimmende Öl zum ersten Ölspeichertank (810) zu fördern, indem obere Abschnitte des ersten Ölspeichertanks (810) und des zweiten Ölspeichertanks (820) verbunden sind.

7. System nach Anspruch 1, wobei jeder der Schwenkarme (430) mit einem Anschlag (432) versehen ist, der in einer einander zugewandten Richtung am gegenüberliegenden Ende des entsprechenden Schwenkarms (430) vorspringend ausgebildet ist.

8. System nach Anspruch 7, wobei jeder der Anschläge (432) mit dem gegenüberliegenden Ende des entsprechenden der Schwenkarme (430) winkelverstellbar gekoppelt ist.

9. System nach Anspruch 2, ferner umfassend eine oder mehrere Ölsammelanordnungen, die aus einem Rotationsskimmer (200), einem Messerskimmer (500) und einem Vakuumsaugskimmer (600) ausgewählt sind.

10. System nach Anspruch 1, ferner umfassend:
Ausrüstung (940) zum Sammeln von an das Ufer strömendem Abfall, die dazu ausgelegt ist, Abfall am Ufer und am Strand zu sammeln, während ein Transportförderer (942) mit einer Vielzahl von Rechen (952) rotiert, indem er lösbar mit dem Heck des Amphibienfahrzeugs (11) gekoppelt ist.

## Revendications

1. Système multifonctionnel (10) de récupération d'hydrocarbures à haute viscosité s'échouant sur un rivage et y adhérant, qui enlève et récupère les hydrocarbures s'échouant en provenance de la mer sur un rivage ou les hydrocarbures adhérant à un rivage en étant monté sur un véhicule amphibie (110) qui est apte à se déplacer sur une zone néritique et sur la terre, le système comprenant :
un ensemble de collecte d'hydrocarbures accouplé de manière amovible à l'avant du véhicule amphibie (11) et conçu pour collecter des hydrocarbures ;
un ensemble de traitement des hydrocarbures récupérés (800) monté sur une partie supérieure du véhicule amphibie et conçu pour recevoir sélectivement les hydrocarbures collectés à partir de l'ensemble de collecte d'hydrocarbures et séparer l'eau des hydrocarbures reçus par le biais d'un séparateur hydrocarbures-eau (830) ;
un ensemble de transfert (700) relié à l'ensemble de collecte d'hydrocarbures et conçu pour transférer les hydrocarbures collectés de l'ensemble de collecte d'hydrocarbures à l'ensemble de traitement des hydrocarbures récupérés (800) ; et
un ensemble pompe de transfert (700) relié à l'ensemble de transfert (700) et conçu pour transférer les hydrocarbures à l'ensemble de traitement des hydrocarbures récupérés (800) ou vers l'extérieur
l'ensemble de collecte d'hydrocarbures comprenant un écumeur racleur (400) conçu pour collecter les hydrocarbures dans une direction vers l'ensemble de transfert (700) en étant fournis de manière mobile dans une direction dans laquelle une extrémité opposée d'un de ses côtés est éloignée ou rapprochée d'une extrémité opposée d'un côté opposé avec une extrémité d'un côté et une extrémité du côté opposé comme références, respectivement ; l'écumeur racleur (400) comprenant :
une seconde plaque de recouvrement (410) dont un côté est accouplé à l'ensemble de transfert (700) et pourvu d'une ouverture (411) ouverte vers l'avant ;
une paire de supports (420) dont une extrémité est reliée à l'un correspondant des côtés opposés de l'ouverture (411) ;
des bras de balayage (430) ayant chacun une extrémité accouplée par charnière à une extrémité opposée du support (420) correspondant, et une extrémité opposée étant formée de manière extensible vers l'avant du véhicule amphibie (11), collectant ainsi les hydrocarbures ;
un tuyau d'alimentation en eau de mer (434) installé à l'intérieur de chacun des bras de balayage (430) le long d'une direction longitudinale de celui-ci et conçu pour recevoir l'eau fournie par l'ensemble de traitement des hydrocarbures récupérés (800) et transférer l'eau reçue à chacun des bras de balayage (430) ; et
une pluralité de buses de pulvérisation (440) installées à intervalles réguliers sur une surface de chacun des bras de balayage (430) se faisant face, reliées au tuyau d'alimentation en eau de mer (434) et conçues pour pulvériser l'eau reçue du tuyau d'alimentation en eau de mer (434) vers l'extérieur, entraînant ainsi les hydrocarbures ;
chacun des éléments de verrouillage (450) étant placé entre le bras de balayage (430) correspondant et la seconde plaque de recouvrement (410),
chacun des éléments de verrouillage (450) ayant une forme de tige à plusieurs étages ayant une structure télescopique conçue pour déplacer le bras de balayage (430) correspondant dans une direction dans laquelle le bras de balayage (430) correspondant est plus proche ou plus éloigné de la seconde plaque de recouvrement (410).

2. Système selon la revendication 1, comprenant en outre :
une paire de bras de liaison (300) placés dans des directions parallèles l'une à l'autre à l'avant du véhicule amphibie (11), chacun des bras (300) ayant un côté relié par charnière à l'avant du véhicule amphibie (11) et un côté opposé relié à un ensemble de collecte d'hydrocarbures,
le côté opposé de chacun des bras (300) étant sélectivement accouplé à l'ensemble de collecte d'hydrocarbures.

3. Système selon la revendication 1, l'ensemble de transfert (700) comprenant :
un corps de transfert (701) formé d'un espace de transfert (703), dont un côté est ouvert vers l'avant et dans lequel sont introduits les hydrocarbures et les substances étrangères transférés depuis l'ensemble de collecte d'hydrocarbures ;
une vis de guidage (710) conçue pour transférer les hydrocarbures et les substances étrangères à l'intérieur de l'espace de transfert (703) d'un côté à un côté opposé en étant installée de manière rotative dans l'espace de transfert (703) ;
un transporteur d'écrémeur (720) conçu pour transférer les hydrocarbures et les substances étrangères reçues de la vis de guidage (710) vers l'ensemble de traitement des hydrocarbures récupérés (800) ; et
un plateau (730) situé au niveau d'une partie inférieure du corps de transfert (701) et pourvu d'un espace de logement (731) qui reçoit les hydrocarbures et l'eau tombant du fond d'une plaque de séparation (705).

4. Système selon la revendication 3, l'ensemble de traitement des hydrocarbures comprenant en outre :
un premier réservoir de stockage d'hydrocarbures (810) conçu pour recevoir les hydrocarbures transférés depuis l'ensemble de transfert (700) ou l'ensemble pompe de transfert (750) ;
un second réservoir de stockage d'hydrocarbures (820) conçu pour recevoir les hydrocarbures et l'eau récupérés de l'ensemble de transfert (700) ;
le séparateur hydrocarbures-eau (830) conçu pour séparer l'eau des hydrocarbures récupérés en étant relié au second réservoir de stockage d'hydrocarbures (820), évacuer l'eau séparée vers l'extérieur et fournir les hydrocarbures séparés au premier réservoir de stockage d'hydrocarbures (810) ; et
une conduite de récupération d'hydrocarbures (841) conçue pour transférer les hydrocarbures séparés du séparateur hydrocarbures-eau (830) vers le second réservoir de stockage d'hydrocarbures (820) en reliant le séparateur hydrocarbures-eau (830) et le second réservoir de stockage d'hydrocarbures (820).

5. Système selon la revendication 4, l'ensemble pompe de transfert (750) comprenant :
une pompe de transfert (752) située à l'intérieur du plateau (730), ainsi conçue pour pomper les hydrocarbures et l'eau situés dans l'espace de logement (731) et pour transférer les hydrocarbures et l'eau vers l'ensemble de traitement des hydrocarbures récupérés (800) ou vers l'extérieur ;
une première conduite de transfert (754) dont une extrémité est reliée à la pompe de transfert (752) et une extrémité opposée est sélectivement reliée à l'un ou l'autre du premier réservoir de stockage d'hydrocarbures (810) et d'un tuyau de décharge externe (H) transféré de l'extérieur ; et
une seconde conduite de transfert (756) dont une extrémité est reliée à la pompe de transfert (752) et une extrémité opposée est reliée au second réservoir de stockage d'hydrocarbures (820).

6. Système selon la revendication 5, l'ensemble pompe de transfert (750) comprenant en outre une conduite de transfert d'hydrocarbures flottants (850) conçue pour transférer les hydrocarbures flottant sur une partie supérieure du second réservoir de stockage d'hydrocarbures (820) vers le premier réservoir de stockage d'hydrocarbures (810) en reliant les parties supérieures du premier réservoir de stockage d'hydrocarbures (810) et du second réservoir de stockage d'hydrocarbures (820).

7. Système selon la revendication 1, chacun des bras de balayage (430) étant pourvu d'une butée (432), formée en saillie dans une direction mutuellement opposée au niveau de l'extrémité opposée du bras de balayage (430) correspondant.

8. Système selon la revendication 7, chacune des butées (432) étant accouplée à l'extrémité opposée du bras de balayage (430) correspondant de manière à pouvoir en régler l'angle.

9. Système selon la revendication 2 comprenant en outre un ou plusieurs ensembles de collecte d'hydrocarbures choisis parmi un écumeur à rotation (200), un écumeur à lame (500) et un écumeur à aspiration sous vide (600).

10. Système selon la revendication 1, comprenant en outre :
un équipement (940) destiné à collecter les déchets s'échouant sur le rivage, conçu pour collecter les déchets sur le rivage et la plage tout en faisant tourner un transporteur de transfert (942) comportant une pluralité de râteaux (952) en étant accouplé de manière amovible à l'arrière du véhicule amphibie (11).
